# EUROPÄISCHE PATENTANMELDUNG

(11) **EP 1 890 210 A1**
(43) Veröffentlichungstag der Anmeldung: **20.02.2008**
(21) Anmeldenummer: 07014843.2
(22) Anmeldetag: 28.07.2007
(51) Int. Cl.: G05B 19/406, G05B 19/418, H01H 3/02, H01H 9/18

(54) **Verfahren und Vorrichtung zur Kennzeichnung des Betriebszustands eines Bedienelementes**

(30) Priorität: 16.08.2006 DE 102006038503
(71) Anmelder: Phoenix Contact GmbH & Co. KG, 32825 Blomberg (DE)
(72) Erfinder: Kalhoff, Johannes, 32825 Blomberg (DE); Hüttermeier, Thomas, 32791 Lange (DE)
(74) Vertreter: Herden, Andreas F.

(57) **Zusammenfassung**

Um den aktuellen Betriebszustand von zur Steuerung einer Prozessanlage eingesetzten Bedienelementen flexibel zu kennzeichnen, sieht die Erfindung ein Verfahren vor zum Kennzeichnen des Betriebszustandes wenigstens eines für einen aktiven und einen passiven Betriebszustand ausgebildeten Bedienelementes einer Steuerungsvorrichtung, wobei durch das Bedienelement im aktiven Betriebszustand eine Prozessfunktion eines Bereiches einer Prozessanlage gesteuert wird, umfassend die Schritte
- Verbinden der Steuerungsvorrichtung mit der Prozessanlage,
- funktionale Zuordnung des Bedienelementes zu der Prozessfunktion, und
- Kennzeichnen des Betriebszustandes des Bedienelementes als aktiv nach erfolgreicher funktionaler Zuordnung des Bedienelementes zu der Prozessfunktion.

Ferner sieht die Erfindung eine Steuerungsvorrichtung zum Steuern wenigstens einer Prozessfunktion eines Bereiches einer Prozessanlage, sowie eine Prozessanlage vor, welche zum Ausführen des erfindungsgemäßen Verfahrens geeignet sind.

## Beschreibung

Die Erfindung betrifft allgemein industrielle Prozessanlagen, und insbesondere ein Verfahren zum Kennzeichnen eines Betriebszustandes, sowie eine zur Durchführung des Verfahrens geeignete Steuervorrichtung und Prozessanlage.

In der Sicherheitstechnik werden Not-Aus-Einrichtungen dazu verwendet, Maschinen und Anlagen im Fehlerfall oder im Falle einer Gefahr für Leib und Leben still zu setzen. Typischerweise werden Not-Aus-Einrichtungen durch einen Taster betätigt, dessen Schaltelement einen roten Betätiger aufweist und einen gelben Hintergrund besitzt. Bei Betätigen der Not-Aus-Einrichtung wird die Maschinen- bzw. Anlagenelemente durch einen Not-Stop oder Not-Halt in den sicheren Zustand überführt. An Maschinen sichtbar angebrachte Not-Aus-Taster sind immer aktiv zu halten, um im Gefahrenfall einen sicheren Zustand einzuleiten. Da nicht aktive aber gebrauchsfähig aussehende Not-Aus-Taster zu einem Sicherheitsrisiko werden können, da die Betätigung nicht zum erwarteten Halt der Maschine oder Anlage führt, müssen nicht aktive Schalter abgebaut, nicht sichtbar verschlossen oder in eine andere Farbgebung umgebaut werden. Diese Vorgehensweise ist aufwändig und teilweise unpraktikabel.

Aus DE 199 19 012 A1 ist ein Verfahren zum Kennzeichnen von Not-Aus-Befehlseinrichtungen bekannt, welche von einer Anlage trennbar sind, wobei die Not-Aus-Befehlseinrichtung im spannungslosen und nicht mit der Anlage verbundenen Zustand farblich neutral erscheint und erst mit einer funktionsfähigen Verbindung mit der Anlage und/oder Anlegen einer Spannung an die Not-Aus-Befehlseinrichtung eine spezifische Farbgebung aktiviert wird. Dieses Verfahren ist jedoch beschränkt auf die Notabschaltung einer gesamten Anlage und auf das Kennzeichnen entsprechender Not-Aus-Befehlseinrichtungen.

Der Erfindung liegt daher die Aufgabe zugrunde, einen Weg aufzuzeigen, wie der Betriebszustand von Steuerelementen zur Steuerung einer Prozessanlage oder Maschine flexibel gekennzeichnet werden kann, welches insbesondere auch in komplexen Anlagen oder in einem Verbund von Maschinen eingesetzt werden kann.

Die Aufgabe wird in überraschend einfacher Weise durch einen Gegenstand gemäß einem der anhängenden unabhängigen Ansprüche gelöst. Vorteilhafte Ausführungsformen und Weiterbildungen sind in den Unteransprüchen umschrieben.

Das erfindungsgemäße Verfahren dient zum Kennzeichnen des Betriebszustandes wenigstens eines für einen aktiven und einen passiven Betriebszustand ausgebildeten Bedienelementes einer Steuerungsvorrichtung, wobei durch das Bedienelement im aktiven Betriebszustand eine Prozessfunktion eines Bereiches einer Prozessanlage gesteuert wird, mit den Schritten des Verbindens der Steuerungsvorrichtung mit der Prozessanlage, der funktionalen Zuordnung des Bedienelementes zu der Prozessfunktion, und dem Kennzeichnen des Betriebszustandes des Bedienelementes als aktiv nach erfolgreicher funktionaler Zuordnung des Bedienelementes zu der Prozessfunktion.

Der Begriff der Prozessanlage im Sinne der vorliegenden Erfindung umfasst jede Art von Vorrichtung zum automatisierten Durchführen technischer Prozesse, wie beispielsweise Fertigungsanlagen, Automatisierungsanlagen, chemische Prozessanlagen oder jede Art von Maschine oder Maschinenverbund. Durch das Bedienelement wird im aktiven Betriebszustand eine Prozessfunktion zumindest eines Bereiches einer Prozessanlage gesteuert. Ein solcher Bereich kann räumlich, zum Beispiel durch eine Abgrenzung, definiert sein, oder auch eine vorbestimmte Maschine oder Gruppe von Maschinen umfassen. Auch kann der Bereich als komplette Prozessanlage definiert sein.

Das Verfahren ermöglicht eine flexible Zuordnung verschiedener Prozessfunktionen zu den Bedienelementen einer Steuerungsvorrichtung, wobei nur bei erfolgreicher funktionaler Zuordnung eine entsprechende Kennzeichnung der Bedienelemente erfolgt. Auf diese Weise kann eine Steuerungsvorrichtung flexibel an unterschiedliche Anforderungen angepasst werden, wobei der Bediener der Steuerungsvorrichtung zu jedem Zeitpunkt durch die entsprechende Kennzeichnung über den Betriebszustand der Bedienelemente informiert ist.

Besonders vorteilhaft ist das Verfahren einsetzbar in komplexen Prozessanlagen mit separat voneinander zu steuernden Bereichen, wie beispielsweise einem Maschinenverbund mit verketteten Maschinen, wobei an einzelnen Maschinen beispielsweise Wartungsarbeiten durchführbar sein sollen ohne den Betrieb der übrigen Maschinen zu unterbrechen.

Das erfindungsgemäße Verfahren ist besonders geeignet für den Einsatz von Steuerungsvorrichtungen, welche flexibel mit der Prozessanlage verbunden und wieder getrennt werden können. Dementsprechend erfolgt das Verbinden der Steuerungsvorrichtung mit der Prozessanlage vorteilhaft mittels einer Kabelverbindung. Für ein besonders hohes Maß an Mobilität und Flexibilität erfolgt das Verbinden der Steuerungsvorrichtung mit der Prozessanlage besonders bevorzugt mittels einer drahtlosen Verbindung. Dies ist besonders vorteilhaft bei Einsatz einer als tragbare Steuereinheit ausgebildeten Steuerungsvorrichtung.

Das Verfahren erlaubt auch den flexiblen Einsatz einer Steuerungsvorrichtung für mehrere Prozessanlagen. Zu diesem Zweck umfasst das Verfahren vorteilhaft die Schritte des Auswählens einer Prozessanlage und des automatischen Verbindens der Steuerungsvorrichtung mit der ausgewählten Prozessanlage. Das Auswählen der Prozessanlage erfolgt besonders vorteilhaft durch das Bereitstellen einer Identifikationseinheit, das Verbinden der Identifikationseinheit mit der Steuerungsvorrichtung, und das Übertragen einer Identifikationsinformation von der Identifikationseinheit zu der Steuerungsvorrichtung, wobei die Identifikationsinformation die Prozessanlage eindeutig identifiziert. Mittels einer solchen Identifikationseinheit, im Folgenden auch als Marker bezeichnet, kann auf eine für den Benutzer besonders einfache und sichere Weise eine Zuordnung der Steuerungsvorrichtung zu einer ausgewählten Prozessanlage erfolgen.

Ferner umfasst das Verfahren vorteilhaft das Auswählen eines durch das Bedienelement der Steuerungsvorrichtung zu steuernden Bereiches einer Prozessanlage, wobei durch das Bedienelement im aktiven Betriebszustand eine Prozessfunktion dieses ausgewählten Bereiches gesteuert wird. Auch die Auswahl des zu steuernden Bereiches kann mittels eines entsprechenden Markers erfolgen.

Zur flexiblen Zuordnung verschiedener Prozessfunktionen umfasst das erfindungsgemäße Verfahren vorteilhaft das Auswählen einer Prozessfunktion und die automatische funktionale Zuordnung des Bedienelementes zu der ausgewählten Prozessfunktion. Das Auswählen der Prozessfunktion erfolgt wiederum besonders vorteilhaft durch das Bereitstellen einer Identifikationseinheit, das Verbinden der Identifikationseinheit mit der Steuerungsvorrichtung, und das Übertragen einer Identifikationsinformation von der Identifikationseinheit zu der Steuerungsvorrichtung, wobei die Identifikationsinformation die Prozessfunktion eindeutig identifiziert.

Mit besonderem Vorteil ist eine Identifikationseinheit, wie sie oben beschrieben wurde, mit der Prozessanlage verbunden und bezieht die Identifikationsinformation von der Prozessanlage.

Das Markern kann durch fixe Kodierung, flexible Zuweisung aber auch durch die indirekte Markerung mittels Positionserkennung erfolgen, wobei zur Positionserkennung bekannte Verfahren zum Beispiel unter Verwendung von GPS (Global Positioning System) oder Wireless LAN (WLAN; drahtloses lokales Netzwerk) eingesetzt werden können. Eine Positionserkennung mittels WLAN kann dabei beispielsweise durch Auswerten der Signalstärken mehrerer umgebender Zugangspunkte (Access Points) erfolgen.

Dementsprechend umfasst das Verfahren vorteilhaft das Auswählen einer Prozessanlage durch eine automatische Positionserkennung mittels eines berührungslos wirkenden Positionserkennungssystems, insbesondere unter Verwendung von GPS oder Wireless LAN, und das manuelle oder automatische Verbinden der Steuerungsvorrichtung mit der ausgewählten Prozessanlage.

In einer anderen Ausführungsform des erfindungsgemäßen Verfahrens umfasst die Identifikationseinheit einen Speicher, in dem Identifikationsinformation gespeichert ist, wobei die Identifikationsinformation mit zumindest einer Prozessanlage, mit zumindest einem Bereich einer Prozessanlage und/oder mit zumindest einer Prozessfunktion logisch verknüpft ist.

Je nach Bedarf und Anwendungsfall können somit unterschiedliche Identifikationseinheiten für eine einfache und flexible Konfiguration einer Steuerungsvorrichtung zum Steuern einer Prozessanlage eingesetzt werden.

Da durch das Bedienelement unterschiedliche Prozessfunktionen gesteuert werden können, umfasst das Kennzeichnen des Betriebszustandes des Bedienelementes als aktiv vorzugsweise ein Kennzeichnen der durch das Bedienelement gesteuerten Prozessfunktion. Dies kann beispielsweise durch eine automatische Beschriftung des Bedienelementes erfolgen, wobei die Beschriftung die durch das Bedienelement im aktiven Zustand gesteuerte Prozessfunktion eindeutig identifiziert, oder durch eine geeignete farbliche Kennzeichnung.

In einer besonders bevorzugten Ausführungsform des erfindungsgemäßen Verfahrens umfasst die Prozessfunktion die Notabschaltung zumindest eines Bereiches der Prozessanlage und der Schritt des Kennzeichnens des Betriebszustandes des Bedienelementes als aktiv umfasst ein farbliches Kennzeichnen des Bedienelementes als Not-Aus-Bedienelement gemäß der Norm DIN EN 418. Besonders bevorzugt ist das Bedienelement in dieser Ausführungsform als Not-Aus-Taster ausgebildet, welcher im aktiven Zustand derart farblich gekennzeichnet wird, dass das Betätigungselement eine rote Farbe und der Hintergrund des Betätigungselementes eine gelbe Farbe aufweist.

Durch das Bedienelement der Steuerungsvorrichtung wird im aktiven Betriebszustand eine Prozessfunktion zumindest eines Bereiches einer Prozessanlage gesteuert. Ein solcher Bereich kann räumlich, zum Beispiel durch eine Abgrenzung, definiert sein, oder auch eine vorbestimmte Maschine oder Gruppe von Maschinen umfassen. Auch kann der Bereich die gesamte Prozessanlage umfassen. Dementsprechend umfasst der Schritt des Kennzeichnens des Betriebszustandes des Bedienelementes als aktiv vorteilhaft ein Kennzeichnen des durch das Bedienelement gesteuerten Bereiches der Prozessanlage.

In einer ersten Variante erfolgt die Kennzeichnung des gesteuerten Bereiches nach erfolgreicher funktionaler Zuordnung des Bedienelementes zu der Prozessfunktion, welche auf den gesteuerten Bereich wirkt.

In einer zweiten Variante ist eine dauerhafte Kennzeichnung des zu steuernden Bereiches der Prozessanlage vorgesehen, wobei das Bedienelement der Steuerungsvorrichtung im aktiven Betriebszustand derart gekennzeichnet wird, dass ein Benutzer das Bedienelement eindeutig dem zu steuernden Bereich zuordnet.

In einer weiteren Ausführungsform umfasst das Verfahren ein korrespondierendes Kennzeichnen der Steuerungsvorrichtung und eines Bereiches der Prozessanlage, wobei alle auf der Steuerungsvorrichtung angeordneten Bedienelemente Prozessfunktionen steuern, welche auf den gekennzeichneten Bereich wirken.

Beispielsweise können unterschiedliche Bereiche der Prozessanlage jeweils mit einer alphanumerischen Kennung versehen sein, wobei die Steuerungsvorrichtung eine digitale Anzeige aufweist, auf welcher im aktiven Betriebszustand die Kennung des jeweils gesteuerten Bereiches angezeigt wird. Besonders vorteilhaft sieht das Verfahren eine korrespondierende farbliche Kennzeichnung des gesteuerten Bereiches und des Bedienelementes und/oder der Steuerungsvorrichtung vor, da dies von einem Benutzer schnell und einfach erfassbar ist.

Die korrespondierende Kennzeichnung von Bedienelement und gesteuertem Bereich erfolgt zumindest im aktiven Betriebszustand des Bedienelementes, kann aber auch im passiven Betriebszustand weiter bestehen, sofern durch entsprechende Kennzeichnung für den Benutzer eindeutig erkennbar ist, dass das Bedienelement sich im passiven Betriebszustand befindet.

Das erfindungsgemäße Verfahren umfasst ferner den Schritt des Kennzeichnens des Betriebszustandes des Bedienelementes als passiv bei Verlust der funktionalen Zuordnung des Bedienelementes zu der Prozessfunktion. Dies kann beispielsweise bei beabsichtigter Deaktivierung oder bei einer Störung wie einem Spannungsausfall oder einer nicht mehr intakten drahtlosen Verbindung der Fall sein.

Der Schritt der funktionalen Zuordnung des Bedienelementes zu der Prozessfunktion umfasst vorzugsweise das Austauschen von Daten zwischen Steuerungsvorrichtung und Prozessanlage. Beispielsweise meldet sich die Steuerungsvorrichtung nach Verbinden mit der Prozessanlage bei einer Kontrolleinheit der Prozessanlage an und fordert die Bereitstellung einer durch ein Bedienelement der Steuerungsvorrichtung zu steuernden Prozessfunktion an, und erhält von der Kontrolleinheit eine Bestätigungsnachricht, wenn die funktionale Zuordnung des Bedienelementes zu der Prozessfunktion gewährleistet ist.

Eine erfindungsgemäße Steuerungsvorrichtung zum Steuern wenigstens einer Prozessfunktion eines Bereiches einer Prozessanlage umfasst zumindest ein für einen aktiven und einen passiven Betriebszustand ausgebildetes Bedienelement, wobei das Bedienelement im aktiven Betriebszustand die Prozessfunktion steuert, und eine Einrichtung zum automatischen Kennzeichnen des Betriebszustandes des Bedienelementes.

In einer ersten bevorzugten Ausführungsform ist die Steuerungsvorrichtung als austauschbares Prozessmodul der Prozessanlage ausgebildet, beispielsweise als eines von mehreren je nach Anforderung wahlweise einsetzbaren Modulen. Dies können zum Beispiel unterschiedliche Prozessmodule zur Produktetikettierung sein, welche jeweils für eine andere Art der Etikettierung ausgebildet sind. Eine als austauschbares Prozessmodul ausgebildete Steuerungsvorrichtung kann vorzugsweise dazu ausgebildet sein, nach Verbinden mit der Prozessanlage auf sich selbst wirkende Prozessfunktionen zu steuern.

In einer zweiten bevorzugten Ausführungsform ist die Steuerungsvorrichtung als tragbare Steuereinheit ausgebildet, die zur Steuerung der Prozessfunktion mit der Prozessanlage verbindbar ist. Beispielsweise kann die Steuerungsvorrichtung als Zweihand-Bedienteil zur Unterstützung bei der Wartung oder Anpassung von Maschinen in einem ausgewählten Prozessbereich ausgebildet sein.

Um ein hohes Maß an Mobilität und Flexibilität zu gewährleisten, ist die Steuerungsvorrichtung vorzugsweise drahtlos mit der Prozessanlage verbindbar.

Zur Konfiguration der Steuerungsvorrichtung kann besonders vorteilhaft eine Identifikationseinheit eingesetzt werden, weiche mit der Steuerungsvorrichtung verbindbar ist. Die Identifikationseinheit dient zum automatischen Identifizieren einer Prozessanlage, eines Bereiches einer Prozessanlage und/oder einer Prozessfunktion. Zu diesem Zweck wird eine entsprechende Identifikationsinformation von der Identifikationseinheit zur Steuerungsvorrichtung übertragen. Die Steuerungsvorrichtung ist dementsprechend vorzugsweise dazu ausgebildet, in Antwort auf die empfangene Identifikationsinformation automatisch eine Verbindung zu einer durch die Identifikationsinformation identifizierten Prozessanlage herzustellen beziehungsweise automatisch eine funktionale Zuordnung des Bedienelementes zu einer identifizierten Prozessfunktion oder einem identifizierten Prozessbereich vorzunehmen.

Da eine farbliche Kennzeichnung für einen Benutzer besonders einfach und schnell zu erfassen ist, weist das Bedienelement vorzugsweise zumindest eine in einer vorbestimmten Farbe beleuchtbare Fläche auf. Zur Kennzeichnung mittels einer Farbkombination weist das Bedienelement bevorzugt eine erste beleuchtbare Fläche auf, innerhalb derer ein Betätigungselement angeordnet ist, welches eine zweite beleuchtbare Fläche aufweist, wobei die Einrichtung zum automatischen Kennzeichnen dazu ausgebildet ist, die erste und zweite beleuchtbare Fläche jeweils in einer vorbestimmten Farbe zu beleuchten. Diese Ausführungsform ist besonders vorteilhaft zum automatischen Kennzeichnen des Bedienelementes als Not-Aus-Bedienelement gemäß der Norm DIN EN 418. Prinzipiell kann das Bedienelement zur farblichen Kennzeichnung eine beliebige Anzahl in unterschiedlichen Farben beleuchtbarer Flächen aufweisen. Vorteilhaft weisen die beleuchtbaren Flächen im unbeleuchteten Zustand eine neutrale Farbgebung, wie beispielsweise grau, auf.

Eine erfindungsgemäße Prozessanlage umfasst zumindest einen kennzeichenbaren Prozessbereich und zumindest eine Steuervorrichtung wie oben beschrieben zum Steuern wenigstens einer Prozessfunktion des kennzeichenbaren Prozessbereiches.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung eines Not-Aus-Bedienelementes,
- Fig. 2:: schematisch eine bevorzugte Ausführungsform einer erfindungsgemäßen Steuerungsvorrichtung, welche als tragbare Steuereinheit ausgebildet ist,
- Fig. 3:: eine schematische Darstellung einer Prozessanlage umfassend eine bevorzugte Ausführungsform einer erfindungsgemäßen Steuerungsvorrichtung, welche als austauschbares Prozessmodul ausgebildet ist,
- Fig. 4:: die Prozessanlage aus Fig. 3, zusätzlich umfassend eine als tragbare Steuereinheit ausgebildete Steuerungsvorrichtung, welche drahtlos mit der Prozessanlage verbunden ist,
- Fig. 5a:: schematisch eine erste bevorzugte Ausführungsform eines Not-Aus-Bedienelementes, welches zur Kennzeichnung des zu steuernden Prozessbereiches ausgebildet ist,
- Fig. 5b:: schematisch eine zweite bevorzugte Ausführungsform eines Not-Aus-Bedienelementes, welches zur Kennzeichnung des zu steuernden Prozessbereiches ausgebildet ist,
- Fig. 6:: schematisch eine bevorzugte Ausführungsform einer Steuerungsvorrichtung, welche zur Kennzeichnung des zu steuernden Prozessbereiches ausgebildet ist,
- Fig. 7:: eine schematische Darstellung einer ersten bevorzugten Ausführungsform einer erfindungsgemäßen Prozessanlage mit kennzeichenbaren Prozessbereichen, und
- Fig. 8:: eine schematische Darstellung einer zweiten bevorzugten Ausführungsform einer erfindungsgemäßen Prozessanlage mit kennzeichenbaren Prozessbereichen.

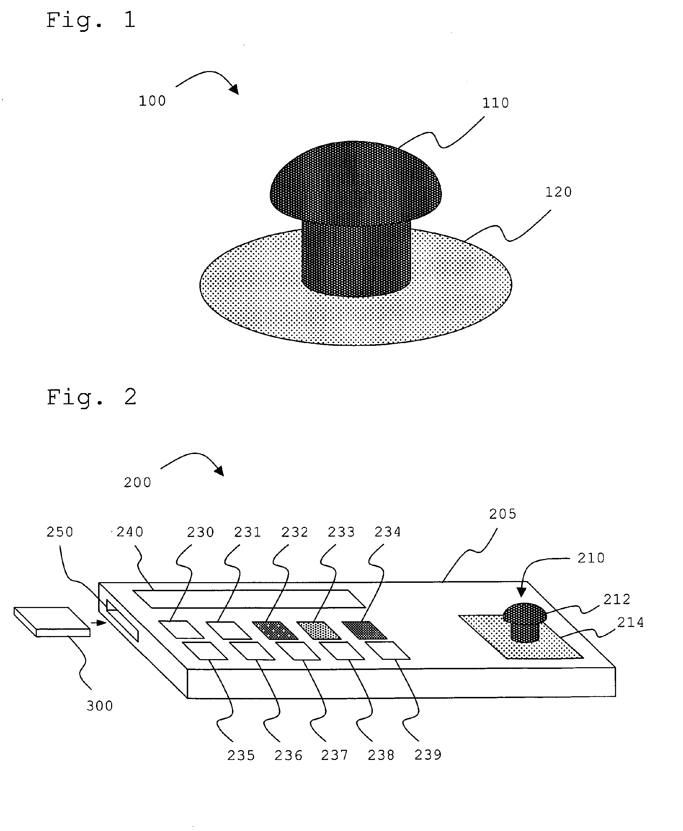

Fig. 1 zeigt eine schematische Darstellung eines als Not-Aus-Taster ausgebildeten Not-Aus-Bedienelementes 100 mit einem auf einem Bodenteil 120 angeordneten, pilzförmigen Betätiger 110, welches zur Durchführung des erfindungsgemäßen Verfahrens geeignet ist. In der dargestellten Ausführungsform weisen Betätiger 110 und Bodenteil 120 eine transparente Oberfläche auf, welche im montierten Zustand des Bedienelementes von innen beleuchtbar sind. Im unbeleuchteten Zustand weisen Betätiger 110 und Bodenteil 120 vorzugsweise eine neutrale, beispielsweise graue, Farbe auf. Zum Kennzeichnen des Betriebszustandes des Not-Aus-Bedienelementes als aktiv wird der Betätiger in roter Farbe und das Bodenteil in gelber Farbe beleuchtet, beispielsweise mit Hilfe entsprechend gefärbter Leuchtmittel.

Eine bevorzugte Ausführungsform einer erfindungsgemäßen Steuerungsvorrichtung 200 ist in Fig. 2 gezeigt. In der dargestellten Ausführungsform umfasst die Steuerungsvorrichtung 200 ein Gehäuse 205, auf welchem ein Not-Aus-Bedienelement 210 mit einem in roter Farbe beleuchtbaren Betätiger 212 und einem in gelber Farbe beleuchtbaren Bodenteil 214, ähnlich dem in Fig. 1 dargestellten, angeordnet ist. Ferner weist die Steuerungsvorrichtung 200 ein Display 240, sowie weitere, als Folientaster ausgebildete Bedienelemente 230 bis 239 auf, wobei die Bedienelemente 230 bis 239 ebenfalls farbig beleuchtbar ausgebildet sind. Auch wenn die dargestellte Ausführungsform nur Bedienelemente in Form von Tastern umfasst, ist die Erfindung nicht auf diese Art von Bedienelementen beschränkt. Es können auch jede andere Art von Bedienelementen, wie beispielsweise Schalter, Schiebe-oder Drehregler, Joysticks oder auch berührungsempfindliche Displays eingesetzt werden.

Zur Aufnahme einer Identifikationseinheit 300 ist ein Anschlußelement 250 vorgesehen, welches bei Einbringen der Identifikationseinheit 300 einen Datenaustausch mit der Steuerungsvorrichtung 200 ermöglicht. Die Identifikationseinheit 300 umfasst in diesem Ausführungsbeispiel einen nicht dargestellten Speicher, in welchem Informationen gespeichert sind, die eine zu steuernde Prozessanlage oder einen zu steuernden Bereich einer Prozessanlage sowie die zugehörigen steuerbaren Prozessfunktionen eindeutig identifizieren. Nach Erhalt dieser Informationen von der Identifikationseinheit 300 meldet sich die Steuerungsvorrichtung 200 automatisch bei der identifizierten Prozessanlage an, vorzugsweise über eine drahtlose Verbindung mittels eines nicht dargestellten Transceivers. Die Identifikationseinheit 300 kann dauerhaft mit der Steuerungsvorrichtung 200 verbunden sein oder nur zur Anmeldung.

Nach erfolgreicher Anmeldung erfolgt eine funktionale Zuordnung der Bedienelemente der Steuerungsvorrichtung 200 zu den identifizierten Prozessfunktionen und Kennzeichnen des Betriebszustandes der zugeordneten Bedienelemente als aktiv. In dem in Fig. 2 dargestellten aktiven Betriebszustand stehen eine Not-Aus-Funktion, steuerbar über das Not-Aus-Bedienelement 210, sowie drei weitere Prozessfunktionen, steuerbar über die Bedienelemente 232, 233 und 234. Zur Kennzeichnung des aktiven Betriebszustandes sind diese Bedienelemente entsprechend beleuchtet. Die übrigen Bedienelemente sind in diesem Ausführungsbeispiel ohne Funktion und dementsprechend unbeleuchet.

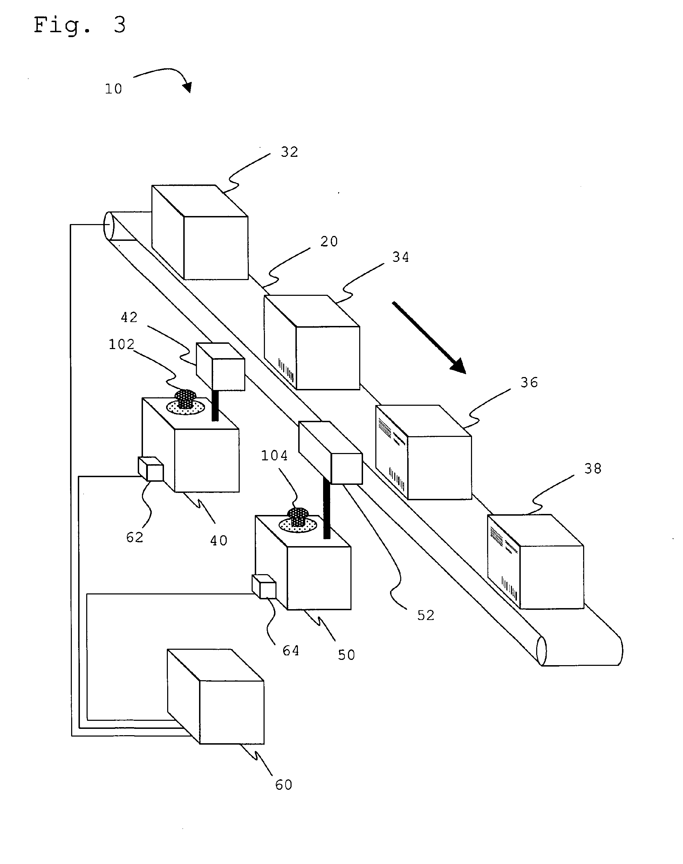

In einer weiteren bevorzugten Ausführungsform ist die erfindungsgemäße Steuerungsvorrichtung als austauschbares Prozessmodul ausgebildet. Dies ist in Fig. 3 beispielhaft dargestellt. Gezeigt ist eine Prozessanlage 10 mit einem Fließband 20, auf dem Produkte 32, 34, 36 und 38 in Pfeilrichtung transportiert werden. Das Fließband wird durch die Kontrolleinheit 60 gesteuert. Zum Etikettieren der Produkte werden Etikettiermodule 40 und 50 eingesetzt, deren Etikettiereinheiten 42 und 52 für unterschiedliche Einsatzzwecke jeweils unterschiedlich ausgebildet sind. Es können noch weitere, nicht dargestellte, Varianten von Etikettiermodule zur Verfügung stehen. Die Etikettiermodule 40 und 50 sind als austauschbare Prozessmodule ausgebildet, um je nach Bedarf die Etikettierung anpassen zu können. Zu diesem Zweck sind Anschlußeinheiten 62 und 64 vorgesehen, mittels derer die Etikettiermodule 40 und 50 mit der Kontrolleinheit 60 der Prozessanlage 10 verbunden werden können.

In dem dargestellten Ausführungsbeispiels sind die Etikettiermodule 40 und 50 jeweils mit einem Not-Aus-Taster 102 bzw. 104 ausgerüstet, welche wie oben in Zusammenhang mit Fig. 1 beschrieben ausgebildet sind. Der jeweilige Not-Aus-Taster 102 bzw. 104 wird durch entsprechende Beleuchtung automatisch als aktiver Not-Aus-Taster gekennzeichnet, sobald das jeweilige Etikettiermodul 40 bzw. 50 mit der Prozessanlage 10, hier insbesondere mit der Kontrolleinheit 60, verbunden ist und die funktionale Zuordnung des Not-Aus-Tasters 102 bzw. 104 mit der Funktion der Notabschaltung des jeweiligen Etikettiermoduls 40 bzw. 50 hergestellt ist. Solange das Etikettiermodul 40 bzw. 50 nicht mit der Prozessanlage verbunden ist, befindet sich der jeweilige Not-Aus-Taster 102 bzw. 104 im passiven Betriebszustand. Die Notabschaltung der Etikettiermodule 40 und 50 erfolgt im vorliegenden Ausführungsbeispiel durch die Kontrolleinheit 60. Dementsprechend kann das funktionale Zuordnen des Not-Aus-Tasters 102 bzw. 104 zu der Prozessfunktion der Notabschaltung des jeweiligen Etikettiermoduls 40 bzw. 50 das Austauschen von Daten zwischen Etikettiermodul und Kontrolleinheit 60 umfassen, wobei die Kontrolleinheit 60 die Verfügbarkeit der Prozessfunktion quittiert. Auf diese Weise wird bei fehlerhafter Kontrolleinheit 60 ein fehlerhaftes Kennzeichnen des Not-Aus-Tasters 102 bzw. 104 als aktiv sicher vermieden.

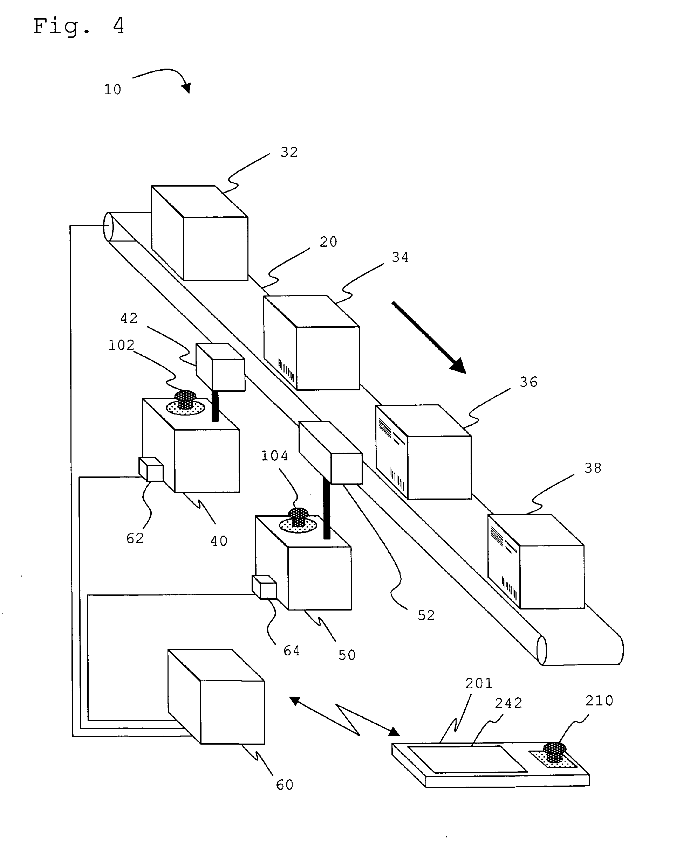

Fig. 4 zeigt die Prozessanlage 10 aus Fig. 3, wobei zusätzlich eine erfindungsgemäße Steuerungsvorrichtung in Form eines tragbaren Steuermoduls 201 vorgesehen ist, welches über eine drahtlose Verbindung mit der Kontrolleinheit 60 der Prozessanlage 10 verbindbar ist. In diesem Ausführungsbeispiel wird zur Identifizierung einer Prozessanlage keine Identifikationseinheit verwendet, sondern das Steuermodul 201 erkennt automatisch alle Prozessanlagen in Kommunikationsreichweite und zeigt diese auf dem integrierten berührungsempfindlichen Display 242 an. Der Benutzer wählt die zu steuernde Prozessanlage aus und quittiert die Auswahl durch eine entsprechende Eingabe über das berührungsempfindliche Display 242. Nach Auswahl der Prozessanlage erfolgt das automatische Aufbauen einer Verbindung zwischen der Steuerungsvorrichtung und der Kontrolleinheit 60 der ausgewählten Prozessanlage 10. Die Kontrolleinheit 60 überträgt automatisch nach Aufbauen der Verbindung Informationen über die steuerbaren Prozessfunktionen der Prozessanlage 10 an das Steuermodul 201. Nach Erhalt dieser Informationen erfolgt eine funktionale Zuordnung der Bedienelemente des Steuermoduls 201 zu den steuerbaren Prozessfunktionen und eine entsprechende Kennzeichnung der Bedienelemente, um dem Benutzer anzuzeigen, dass die Bedienelemente sich im aktiven Betriebszustand befinden. Steht beispielsweise eine Not-Aus-Funktion zur Verfügung, erfolgt eine funktionale Zuordnung zu dem Not-Aus-Taster 210 zu der Not-Aus-Funktion sowie eine entsprechende farbliche Kennzeichnung des Not-Aus-Tasters 210. Im dargestellten Ausführungsbeispiel werden die übrigen steuerbaren Prozessfunktionen über das berührungsempfindliche Display 240 durch entsprechende Benutzereingaben ausgeführt. Eine Kennzeichnung des Displays als aktiv erfolgt in diesem Beispiel durch Anzeige eines entsprechenden Funktionsmenüs zur Steuerung der Prozessfunktionen. Zeigt das Display 240 keine Anzeige, eine Fehleranzeige oder ein Auswahlmenü zur Auswahl einer zu steuernden Prozessanlage in Kommunikationsreichweite, so ist für den Benutzer ersichtlich, dass sich das berührungsempfindliche Display 240 bezüglich der Steuerung der Prozessfunktionen im passiven Betriebszustand befindet.

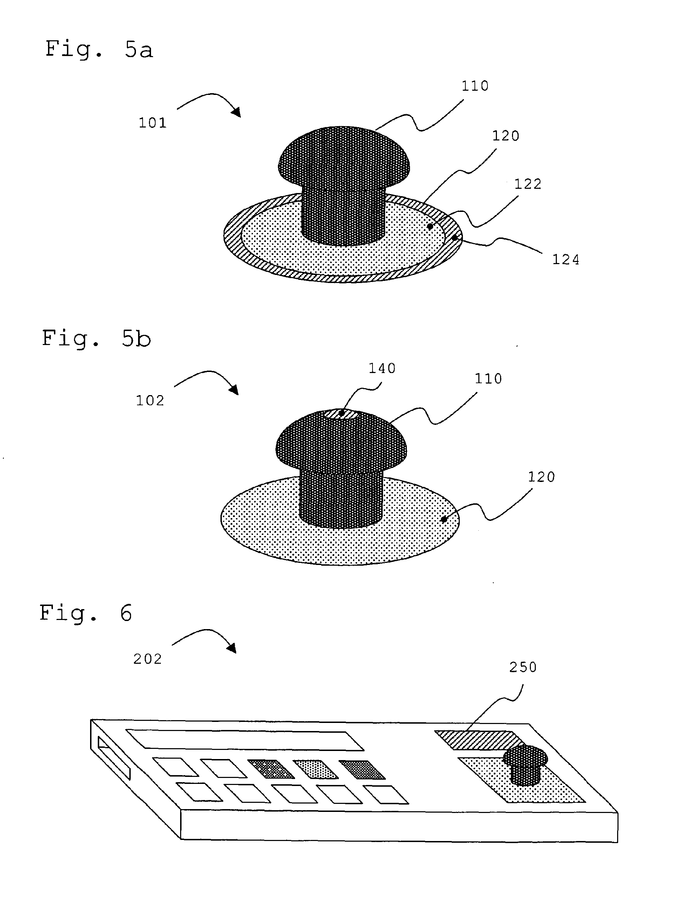

Mit besonderem Vorteil umfasst das Kennzeichnen des Betriebszustandes des Bedienelementes als aktiv ein Kennzeichnen des durch das Bedienelement gesteuerten Bereiches der Prozessanlage. Die Kennzeichnung des gesteuerten Prozessbereiches kann zur einfachen und schnellen optischen Erfassung durch farbliches Kennzeichnen erfolgen. In Fig. 5a und 5b sind zwei entsprechend ausgebildete Ausführungsformen eines Not-Aus-Tasters, in Weiterbildung des in Fig. 1 gezeigten Not-Aus-Tasters 100, dargestellt.

Das Bodenteil 120 des in Fig. 5a gezeigten Not-Aus-Taster 101 umfasst zwei unterschiedlich von innen beleuchtbare Bereiche 122 und 124, wobei der Bereich 122 zur Kennzeichnung der Not-Aus-Funktion den direkten optischen Hintergrund des in roter Farbe beleuchtbaren Betätigers 110 bildet und in gelber Farbe beleuchtbar ist. Der als farbliche Umrandung des Bereiches 122 ausgebildete Bereich 124 dient der farblichen Kennzeichnung des durch den Not-Aus-Taster 101 gesteuerten Prozessbereiches und kann beispielsweise in grüner oder blauer Farbe von innen beleuchtbar ausgebildet sein.

Bei dem in Fig. 5b gezeigten Ausführungsbeispiel weist der Betätiger 110 eine zusätzliche, in einer wählbaren Farbe beleuchtbare Fläche 140 auf, welche zur Kennzeichnung des gesteuerten Prozessbereiches dient.

Fig. 6 zeigt eine erfindungsgemäße Steuerungsvorrichtung 202, welche in Weiterbildung der in Fig. 2 gezeigten Steuerungsvorrichtung 200 zusätzlich eine beleuchtbare Fläche 250 zur Kennzeichnung des im aktiven Betriebszustand durch die Bedienelemente der Steuerungsvorrichtung 202 gesteuerten Prozessbereiches umfasst.

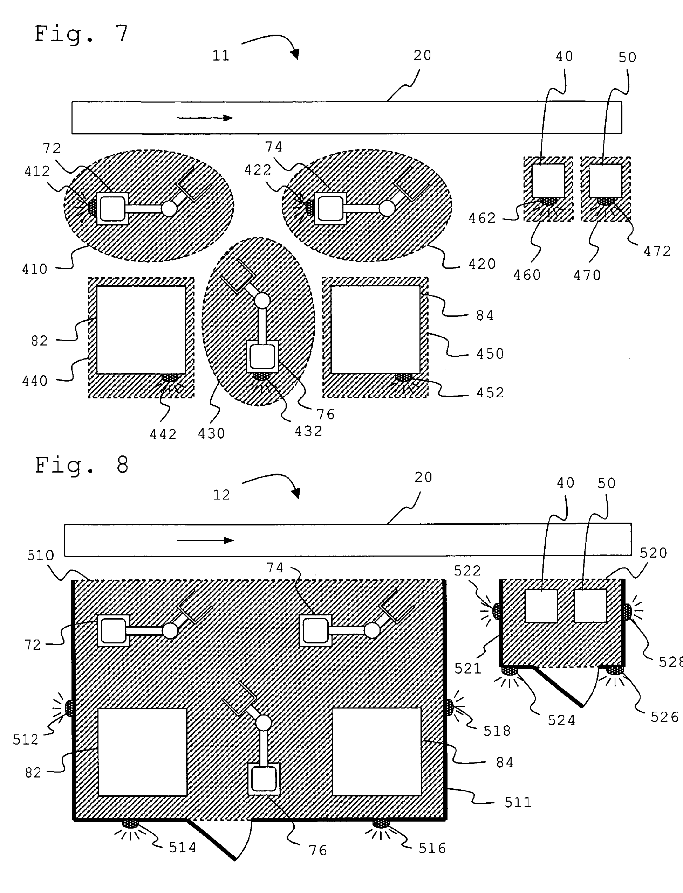

Die farbliche Kennzeichnung der beleuchtbaren Flächen 124, 140 oder 250 erfolgt vorzugsweise korrespondierend zu einer entsprechenden farblichen Kennzeichung des gesteuerten Prozessbereiches. Beispiele für die farbliche Kennzeichnung von Prozessbereichen sind in den Fig. 7 und 8 dargestellt.

In Fig. 7 ist eine beispielhafte Prozessanlage 11 dargestellt, in welcher Produkte über ein Fließband 20 zugeführt und abtransportiert werden. Mittels eines ersten Roboterarms 72 werden die Produkte zu einer Bearbeitungsstation 82 transportiert, und von dort mittels eines zweiten Roboterarms 76 zu einer Verpackungsstation 84. Von dieser werden die Produkte mittels eines dritten Roboterarms 74 wieder zum Fließband 20 transportiert. Mittels der Etikettiermodule 40 und 50 werden die Produkte anschließend etikettiert.

In dem in Fig. 7 dargestellten Beispiel wird durch jede der Maschinen 72, 74, 76, 82, 84, 40 und 50 jeweils ein Prozessbereich 410, 420, 430, 440, 450, 460 bzw. 470 definiert, welcher den Wirkungsbereich bzw. die Gefahrenzone der jeweiligen Maschine angibt. Zur optischen Kennzeichnung des jeweiligen Prozessbereiches ist jede der Maschinen mit einer farbigen Lichtquelle 412, 422, 432, 442, 452, 462 bzw. 472 versehen. Je nach Anwendungsfall kann beispielsweise eine dauerhafte Kennzeichnung der Prozessbereiche in unterschiedlichen Farben erfolgen. In diesem Fall wird ein Bedienelement mit funktionaler Zuordnung zu einer Prozessfunktion, welche auf einen in einer vorbestimmten Farbe gekennzeichneten Prozessbereich wirkt, im aktiven Betriebszustand in der gleichen Farbe gekennzeichnet. Alternativ kann auch die Kennzeichnung des jeweiligen Prozessbereiches erst bei erfolgreicher funktionaler Zuordnung des Bedienelementes erfolgen, wobei in diesem Fall zur Kennzeichnung unterschiedlicher Prozessbereiche die gleiche Farbe verwendet werden kann.

Fig. 8 zeigt ein weiteres Beispiel einer Prozessanlage 12, in welcher die gleichen Maschinen 72, 74, 76, 82, 84, 40 und 50 eingesetzt werden wie bei der in Fig. 7 gezeigten Prozessanlage 11. In diesem Beispiel sind zwei Prozessbereiche 510 und 520 definiert, die jeweils mehrere Maschinen umfassen. Die Prozessbereiche 510 und 520 sind räumlich durch Schutzzäune 511 bzw. 521 begrenzt, welche zur Kennzeichnung der Prozessbereiche jeweils mit farbigen Lichtquellen 512, 514, 516 und 518 bzw. 522, 524, 526 und 528 versehen sind.

Selbstverständlich liegt neben der dargestellten farblichen Kennzeichnung der Prozessbereiche auch jede andere Art der Kennzeichnung im Rahmen der Erfindung, wie beispielsweise eine alphanumerische Kodierung.

Die Erfindung ermöglicht die flexible Kennzeichnung des Betriebszustandes von Bedienelementen zur Steuerung einer Prozessanlage, eines Bereiches einer Prozessanlage oder einzelner Maschinen. Dadurch werden derzeitige Handlungsanweisungen wie beispielsweise zum nicht sichtbaren Verschließen von Steuergeräten überflüssig und Fehlverhalten und Unwissenheit können nicht mehr zu Unfällen und Schäden führen. Durch eine eindeutige Zuordnung zu den erlaubten bzw. gerade aktiven Bedien- und Applikations-Teilen können auch Dritte, wie zum Beispiel Maschinen- und Anlagen-Fremde, aktive und deaktive Bedienelemente, insbesondere Not-Aus-Taster, unterscheiden.

Durch die visuelle Unterstützung und den bedarfsgerechten Einsatz verkabelter oder drahtloser Verbindungen ist eine benutzerfreundliche Handhabung gegeben, die einen einfachen und sicheren Handlungsablauf garantiert. Auch bei Störungen, wie beispielsweise einem Spannungsausfall oder einer nicht mehr aktiven drahtlosen Verbindung, ist ein für den Benutzer sicherer Zustand gewährleistet, da in einem solchen Fall beispielsweise ein Not-Aus-Taster von seiner aktiven rot/gelben Kennzeichnung automatisch auf eine neutrale Kennzeichnung umschaltet.

## Patentansprüche

1. Verfahren zum Kennzeichnen des Betriebszustandes wenigstens eines für einen aktiven und einen passiven Betriebszustand ausgebildeten Bedienelementes einer Steuerungsvorrichtung, wobei durch das Bedienelement im aktiven Betriebszustand eine Prozessfunktion eines Bereiches einer Prozessanlage gesteuert wird, umfassend die Schritte
- Verbinden der Steuerungsvorrichtung mit der Prozessanlage,
- funktionale Zuordnung des Bedienelementes zu der Prozessfunktion, und
- Kennzeichnen des Betriebszustandes des Bedienelementes als aktiv nach erfolgreicher funktionaler Zuordnung des Bedienelementes zu der Prozessfunktion.

2. Verfahren nach Anspruch 1, wobei das Verbinden der Steuerungsvorrichtung mit der Prozessanlage mittels einer Kabelverbindung erfolgt.

3. Verfahren nach Anspruch 1, wobei das Verbinden der Steuerungsvorrichtung mit der Prozessanlage mittels einer drahtlosen Verbindung erfolgt.

4. Verfahren nach Anspruch 3, umfassend die Schritte
- Auswählen einer Prozessanlage und
- automatisches Verbinden der Steuerungsvorrichtung mit der ausgewählten Prozessanlage.

5. Verfahren nach Anspruch 3, umfassend die Schritte
- Auswählen einer Prozessanlage durch eine automatische Positionserkennung mittels berührungslos wirkender Positionserkennungssysteme und
- manuelles oder automatisches Verbinden der Steuerungsvorrichtung mit der ausgewählten Prozessanlage.

6. Verfahren nach Anspruch 4 oder 5, wobei das Auswählen der Prozessanlage erfolgt durch die Schritte
- Bereitstellen einer Identifikationseinheit,
- Verbinden der Identifikationseinheit mit der Steuerungsvorrichtung, und
- Übertragen einer Identifikationsinformation von der Identifikationseinheit zu der Steuerungsvorrichtung, wobei die Identifikationsinformation die Prozessanlage eindeutig identifiziert.

7. Verfahren nach einem der vorstehenden Ansprüche, umfassend die Schritte
- Auswählen einer Prozessfunktion und
- automatische funktionale Zuordnung des Bedienelementes zu der ausgewählten Prozessfunktion.

8. Verfahren nach Anspruch 7, wobei das Auswählen der Prozessfunktion erfolgt durch die Schritte
- Bereitstellen einer Identifikationseinheit,
- Verbinden der Identifikationseinheit mit der Steuerungseinrichtung, und
- Übertragen einer Identifikationsinformation von der Identifikationseinheit zu der Steuerungseinrichtung, wobei die Identifikationsinformation die Prozessfunktion eindeutig identifiziert.

9. Verfahren nach Anspruch 6 oder 8, wobei die Identifikationseinheit mit der Prozessanlage verbunden ist und die Identifikationsinformation von der Prozessanlage bezieht.

10. Verfahren nach Anspruch 6 oder 8, wobei die Identifikationseinheit einen Speicher mit einer darin gespeicherten Identifikationsinformation umfasst, wobei die Identifikationsinformation mit zumindest einer Prozessanlage, mit zumindest einem Bereich einer Prozessanlage und/oder mit zumindest einer Prozessfunktion logisch verknüpft ist.

11. Verfahren nach einem der vorstehenden Ansprüche, wobei der Schritt des Kennzeichnens des Betriebszustandes des Bedienelementes als aktiv ein Kennzeichnen der durch das Bedienelement gesteuerten Prozessfunktion umfasst.

12. Verfahren nach einem der vorstehenden Ansprüche, wobei die Prozessfunktion die Notabschaltung des zumindest einen Bereiches der Prozessanlage umfasst und der Schritt des Kennzeichnens des Betriebszustandes des Bedienelementes als aktiv ein farbliches Kennzeichnen des Bedienelementes als Not-Aus-Bedienelement gemäß der Norm DIN EN 418 umfasst.

13. Verfahren nach einem der vorstehenden Ansprüche, wobei der Schritt des Kennzeichnens des Betriebszustandes des Bedienelementes als aktiv ein Kennzeichnen des durch das Bedienelement gesteuerten Bereiches der Prozessanlage umfasst.

14. Verfahren nach einem der vorstehenden Ansprüche, umfassend ein korrespondierendes Kennzeichnen der Steuervorrichtung und des durch das Bedienelement gesteuerten Bereiches der Prozessanlage.

15. Verfahren nach einem der vorstehenden Ansprüche, umfassend den Schritt des Kennzeichnens des Betriebszustandes des Bedienelementes als passiv bei Verlust der funktionalen Zuordnung des Bedienelementes zu der Prozessfunktion.

16. Verfahren nach einem der vorstehenden Ansprüche, wobei der Schritt der funktionalen Zuordnung des Bedienelementes zu der Prozessfunktion das Austauschen von Daten zwischen Steuerungsvorrichtung und Prozessanlage umfasst.

17. Steuerungsvorrichtung zum Steuern wenigstens einer Prozessfunktion eines Bereiches einer Prozessanlage, umfassend
- zumindest ein für einen aktiven und einen passiven Betriebszustand ausgebildetes Bedienelement, wobei das Bedienelement im aktiven Betriebszustand die Prozessfunktion steuert, und
- eine Einrichtung zum automatischen Kennzeichnen des Betriebszustandes des Bedienelementes.

18. Steuerungsvorrichtung nach Anspruch 17, wobei die Steuerungsvorrichtung als austauschbares Prozessmodul der Prozessanlage ausgebildet ist.

19. Steuerungsvorrichtung nach Anspruch 17, ausgebildet als tragbare Steuereinheit, die zur Steuerung der Prozessfunktion mit der Prozessanlage verbindbar ist.

20. Steuerungsvorrichtung nach einem der vorstehenden Ansprüche, wobei die Steuerungsvorrichtung drahtlos mit der Prozessanlage verbindbar ist.

21. Steuerungsvorrichtung nach einem der vorstehenden Ansprüche, verbindbar mit einer Identifikationseinheit zum Empfang einer Identifikationsinformation.

22. Steuerungsvorrichtung nach Anspruch 21, wobei die Identifikationsinformation eine Prozessanlage eindeutig identifiziert, und die Steuerungsvorrichtung zum automatischen Verbinden mit der identifizierten Prozessanlage ausgebildet ist.

23. Steuerungsvorrichtung nach Anspruch 21, wobei die Identifikationsinformation eine Prozessfunktion eindeutig identifiziert, und die Steuerungsvorrichtung zum automatischen funktionalen Zuordnen des Bedienelementes zu der identifizierten Prozessfunktion ausgebildet ist.

24. Steuerungsvorrichtung nach einem der vorstehenden Ansprüche, wobei die Einrichtung zum automatischen Kennzeichnen dazu ausgebildet ist, das Bedienelement als Not-Aus-Bedienelement gemäß der Norm DIN EN 418 zu kennzeichnen.

25. Steuerungsvorrichtung nach einem der vorstehenden Ansprüche, wobei das Bedienelement eine erste beleuchtbare Fläche aufweist, innerhalb derer ein Betätigungselement angeordnet ist, welches eine zweite beleuchtbare Fläche aufweist, und die Einrichtung zum automatischen Kennzeichnen dazu ausgebildet ist, die erste und zweite beleuchtbare Fläche jeweils in einer vorbestimmten Farbe zu beleuchten.

26. Prozessanlage, umfassend
- zumindest einen kennzeichenbaren Prozessbereich und
- zumindest eine Steuervorrichtung nach einem der Ansprüche 17 bis 25 zum Steuern wenigstens einer Prozessfunktion des kennzeichenbaren Prozessbereiches.
